# EUROPEAN PATENT SPECIFICATION

(11) **EP 2 700 000 B1**
(45) Date of publication and mention of the grant of the patent: **08.06.2022**
(21) Application number: 11864074.7
(22) Date of filing: 19.04.2011
(51) Int. Cl.: G06F 3/14, G06F 3/03, G06F 3/0488, G06F 3/0481, G06F 17/00

(54) **TEXT INDICATOR METHOD AND ELECTRONIC DEVICE**
TEXTINDIKATORVERFAHREN UND ELEKTRONISCHE VORRICHTUNG
PROCÉDÉ D'INDICATEUR DE TEXTE ET DISPOSITIF ÉLECTRONIQUE

(43) Date of publication of application: 26.02.2014
(73) Proprietor: BlackBerry Limited, Waterloo, ON N2K 0A7 (CA)
(72) Inventor: KUO, Margaret, Elizabeth, Waterloo, ON N2L 3W8 (CA); HONG, Yoojin, Redwood City, CA 94065 (US)
(74) Representative: Vigand, Philippe
(86) International application number: PCT/US2011/033009
(87) International publication number: WO 2012/144989

(56) References cited:
- US-A1- 2002 067 346
- US-A1- 2006 132 460
- US-A1- 2009 167 700
- US-A1- 2010 171 713
- US-A1- 2010 293 460
- macmostvideo: "Using TextEdit For Casual Word Processing (MacMost Now 379)", YouTube, 31 March 2010 (2010-03-31), page 1, XP054981297, Retrieved from the Internet: URL:https://www.youtube.com/watch?v=UNCo4J vs5Ys&feature=emb_logo [retrieved on 2021-01-14]
- mahalodotcom: "How to Copy and Paste on The iPad", YouTube, 29 December 2010 (2010-12-29), page 1, XP054981299, Retrieved from the Internet: URL:https://www.youtube.com/watch?v=6LUv4t 12pCE [retrieved on 2021-01-14]
- doubleatheman: "New iPhone 3gs Ad - Copy Paste", YouTube, 29 June 2009 (2009-06-29), page 1, XP054981298, Retrieved from the Internet: URL:https://www.youtube.com/watch?v=nC02Dj tBPKM [retrieved on 2021-01-14]

## Description

### Field of Technology

The present disclosure relates to electronic devices, including but not limited to, portable electronic devices having touch-sensitive displays and their control.

### Background

Electronic devices, including portable electronic devices, have gained widespread use and may provide a variety of functions including, for example, telephonic, electronic messaging and other personal information manager (PIM) application functions. Portable electronic devices include, for example, several types of mobile stations such as simple cellular telephones, smart telephones, wireless personal digital assistants (PDAs), and laptop computers with wireless 802.11 or Bluetooth capabilities.

Portable electronic devices such as PDAs or smart telephones are generally intended for handheld use and ease of portability. Smaller devices are generally desirable for portability. A touch-sensitive display, also known as a touchscreen display, is particularly useful on handheld devices, which are small and have limited space for user input and output. The information displayed on the touch-sensitive displays may be modified depending on the functions and operations being performed. With continued demand for decreased size of portable electronic devices, touch-sensitive displays continue to decrease in size.

US 2010/171713 A1 and US 2010/293460 A1 disclose concepts for manipulating text on touch sensitive display devices.

Improvements in devices with touch-sensitive displays are desirable. The present invention is defined in the appended claims.

### Brief Description of the Drawings

FIG. 1 is a block diagram of a portable electronic device in accordance with the disclosure.
FIG. 2 is a flowchart illustrating a method of moving a text indicator displayed on a touch-sensitive display in accordance with the disclosure.
FIG. 3 is a front view of an electronic device showing a text indicator and handle moving horizontally in accordance with the disclosure.
FIG. 4 is a front view of an electronic device showing a text indicator and handle moving vertically in accordance with the disclosure.
FIG. 5 is a front view of an electronic device showing a text indicator and handle moving near a side of a touch-sensitive display in accordance with the disclosure.
FIG. 6 is a front view of an electronic device showing a text indicator and handle moving near an end of text displayed on a touch-sensitive display in accordance with the disclosure.
FIG. 7 is a front view of an electronic device showing two text indicators and handles moving horizontally and vertically through text displayed on a touch-sensitive display in accordance with the disclosure.
FIG. 8 is a front view of an electronic device showing two text indicators and handles moving near a side of a touch-sensitive display in accordance with the disclosure.
FIG. 9 is a front view of an electronic device showing two text indicators and handles moving near an end of text displayed on a touch-sensitive display in accordance with the disclosure.

### Detailed Description

The following describes an apparatus for and method of displaying a text indicator and an optional movable handle for the text indicator. Movement of the movable handle is coordinated with a touch associated with the movable handle. Movement of the text indicator is moved at least some of the time in coordination with movement of the handle. Display of the text indicator is moved in coordination with movement of the touch at least along part of a path of the touch. The text indicator may at times move away from the location of an associated handle, although the location of the handle is maintained with the touch location as the touch moves. Various advantages are provided such that movement of one or more text indicators may be facilitated without having to move an input member from the touch-sensitive display among a wide variety of text conditions.

For simplicity and clarity of illustration, reference numerals may be repeated among the figures to indicate corresponding or analogous elements. Numerous details are set forth to provide an understanding of the embodiments described herein. The embodiments may be practiced without these details. In other instances, well-known methods, procedures, and components have not been described in detail to avoid obscuring the embodiments described. The description is not to be considered as limited to the scope of the embodiments described herein.

The disclosure generally relates to an electronic device, which is a portable electronic device in the embodiments described herein. Examples of portable electronic devices include mobile, or handheld, wireless communication devices such as pagers, cellular phones, cellular smart-phones, wireless organizers, personal digital assistants, wirelessly enabled notebook computers, tablet computers, and so forth. The portable electronic device may also be a portable electronic device without wireless communication capabilities, such as a handheld electronic game device, digital photograph album, digital camera, or other device.

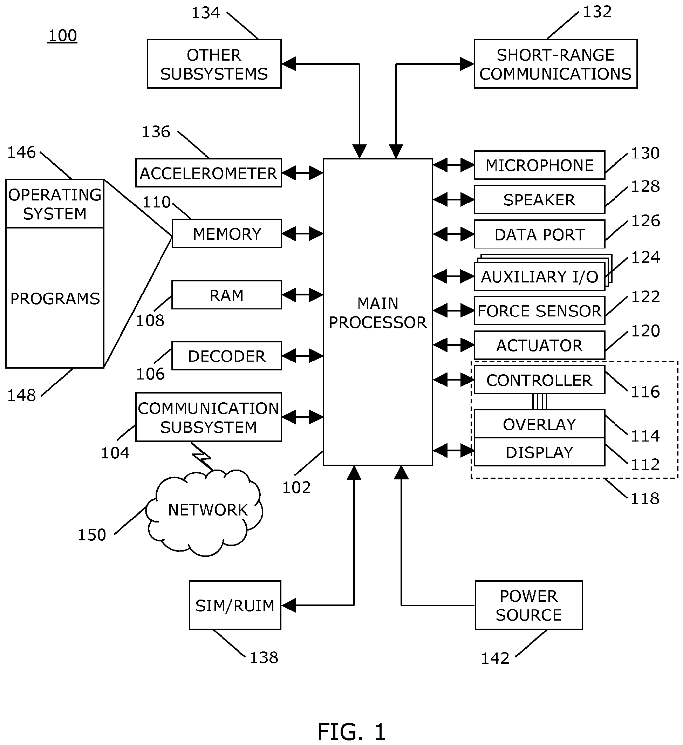

A block diagram of an example of a portable electronic device 100 is shown in FIG. 1. The portable electronic device 100 includes multiple components, such as a processor 102 that controls the overall operation of the portable electronic device 100. Communication functions, including data and voice communications, are performed through a communication subsystem 104. Data received by the portable electronic device 100 is decompressed and decrypted by a decoder 106. The communication subsystem 104 receives messages from and sends messages to a wireless network 150. The wireless network 150 may be any type of wireless network, including, but not limited to, data wireless networks, voice wireless networks, and networks that support both voice and data communications. A power source 142, such as one or more rechargeable batteries or a port to an external power supply, powers the portable electronic device 100.

The processor 102 interacts with other components, such as Random Access Memory (RAM) 108, memory 110, a display 112 with a touch-sensitive overlay 114 operably coupled to an electronic controller 116 that together comprise a touch-sensitive display 118, one or more actuators 120, one or more force sensors 122, an auxiliary input/output (I/O) subsystem 124, a data port 126, a speaker 128, a microphone 130, short-range communications 132, and other device subsystems 134. User-interaction with a graphical user interface is performed through the touch-sensitive overlay 114. The processor 102 interacts with the touch-sensitive overlay 114 via the electronic controller 116. Information, such as text, characters, symbols, images, icons, and other items that may be displayed or rendered on a portable electronic device, is displayed on the touch-sensitive display 118 via the processor 102. The processor 102 may interact with an accelerometer 136 that may be utilized to detect direction of gravitational forces or gravity-induced reaction forces.

To identify a subscriber for network access, the portable electronic device 100 uses a Subscriber Identity Module or a Removable User Identity Module (SIM/RUIM) card 138 for communication with a network, such as the wireless network 150. Alternatively, user identification information may be programmed into memory 110.

The portable electronic device 100 includes an operating system 146 and software programs or components 148 that are executed by the processor 102 and are typically stored in a persistent, updatable store such as the memory 110. Additional applications or programs may be loaded onto the portable electronic device 100 through the wireless network 150, the auxiliary I/O subsystem 124, the data port 126, the short-range communications subsystem 132, or any other suitable subsystem 134.

A received signal such as a text message, an e-mail message, or web page download is processed by the communication subsystem 104 and input to the processor 102. The processor 102 processes the received signal for output to the display 112 and/or to the auxiliary I/O subsystem 124. A subscriber may generate data items, for example e-mail messages, which may be transmitted over the wireless network 150 through the communication subsystem 104. For voice communications, the overall operation of the portable electronic device 100 is similar. The speaker 128 outputs audible information converted from electrical signals, and the microphone 130 converts audible information into electrical signals for processing.

The touch-sensitive display 118 may be any suitable touch-sensitive display, such as a capacitive, resistive, infrared, surface acoustic wave (SAW) touch-sensitive display, strain gauge, optical imaging, dispersive signal technology, acoustic pulse recognition, and so forth, as known in the art. A capacitive touch-sensitive display includes a capacitive touch-sensitive overlay 114. The overlay 114 may be an assembly of multiple layers in a stack including, for example, a substrate, a ground shield layer, a barrier layer, one or more capacitive touch sensor layers separated by a substrate or other barrier, and a cover. The capacitive touch sensor layers may be any suitable material, such as patterned indium tin oxide (ITO).

One or more touches, also known as touch contacts or touch events, may be detected by the touch-sensitive display 118. The processor 102 may determine attributes of the touch, including a location of a touch. Touch location data may include an area of contact or a single point of contact, such as a point at or near a center of the area of contact. The location of a detected touch may include x and y components, e.g., horizontal and vertical components, respectively, with respect to one's view of the touch-sensitive display 118. For example, the x location component may be determined by a signal generated from one touch sensor, and the y location component may be determined by a signal generated from another touch sensor. A signal is provided to the controller 116 in response to detection of a touch. A touch may be detected from any suitable input member, such as a finger, thumb, appendage, or other objects, for example, a stylus, pen, or other pointer, depending on the nature of the touch-sensitive display 118. Multiple simultaneous touches may be detected.

The actuator(s) 120 may be depressed or activated by applying sufficient force to the touch-sensitive display 118 to overcome the actuation force of the actuator 120. The actuator(s) 120 may be actuated by pressing anywhere on the touch-sensitive display 118. The actuator(s) 120 may provide input to the processor 102 when actuated. Actuation of the actuator(s) 120 may result in provision of tactile feedback. When force is applied, the touch-sensitive display 118 is depressible, pivotable, and/or movable. Such a force may actuate the actuator(s) 120. The touch-sensitive display 118 may, for example, float with respect to the housing of the portable electronic device, i.e., the touch-sensitive display 118 may not be fastened to the housing.

A mechanical dome switch actuator may be utilized. In this example, tactile feedback is provided when the dome collapses due to imparted force and when the dome returns to the rest position after release of the switch. Alternatively, the actuator 120 may comprise one or more piezoelectric (piezo) devices that provide tactile feedback for the touch-sensitive display 118. Optional force sensors 122 may be disposed in conjunction with the touch-sensitive display 118 to determine or react to forces applied to the touch-sensitive display 118. The force sensor 122 may be disposed in line with the piezo actuator 120. The force sensors 122 may be force-sensitive resistors, strain gauges, piezoelectric or piezoresistive devices, pressure sensors, quantum tunneling composites, force-sensitive switches, or other suitable devices.

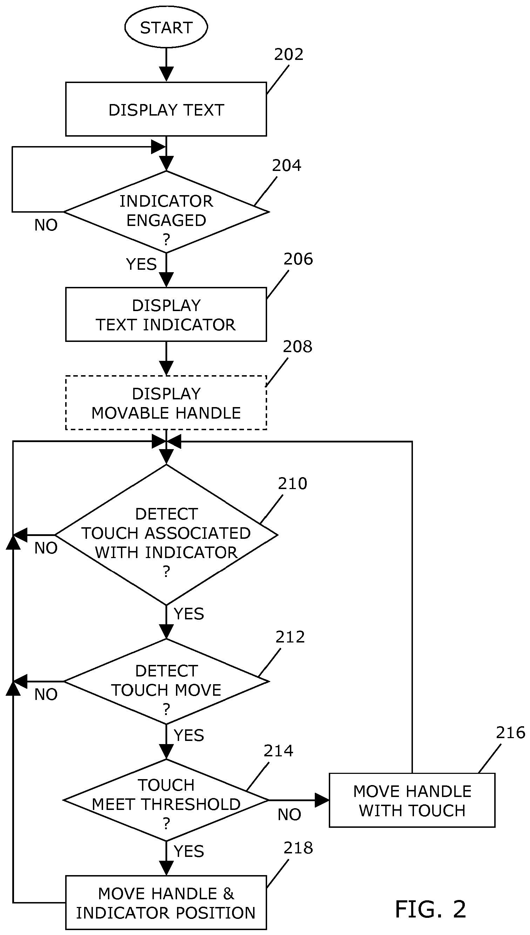

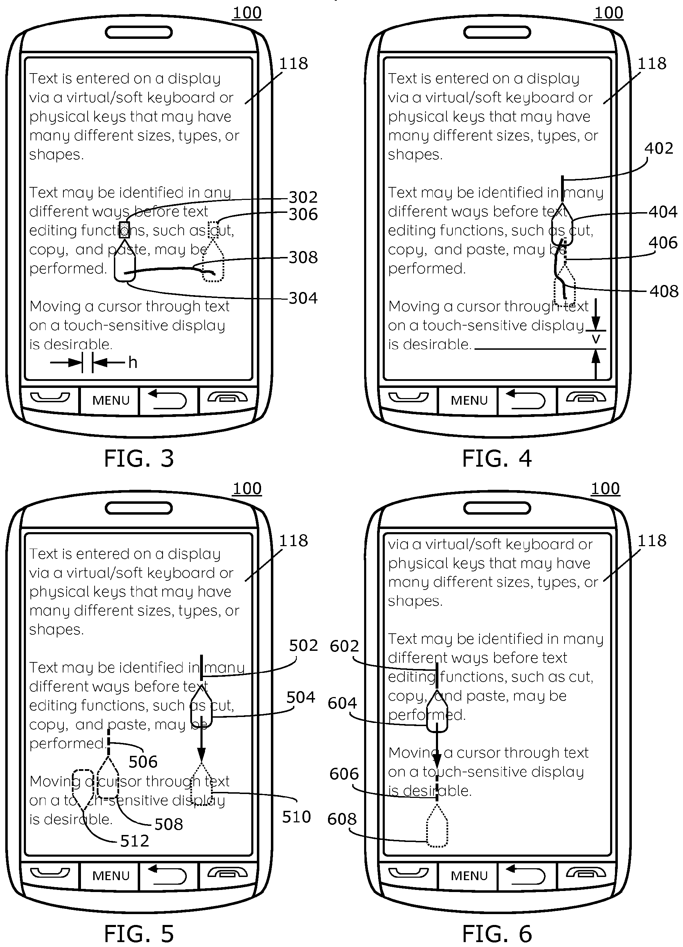

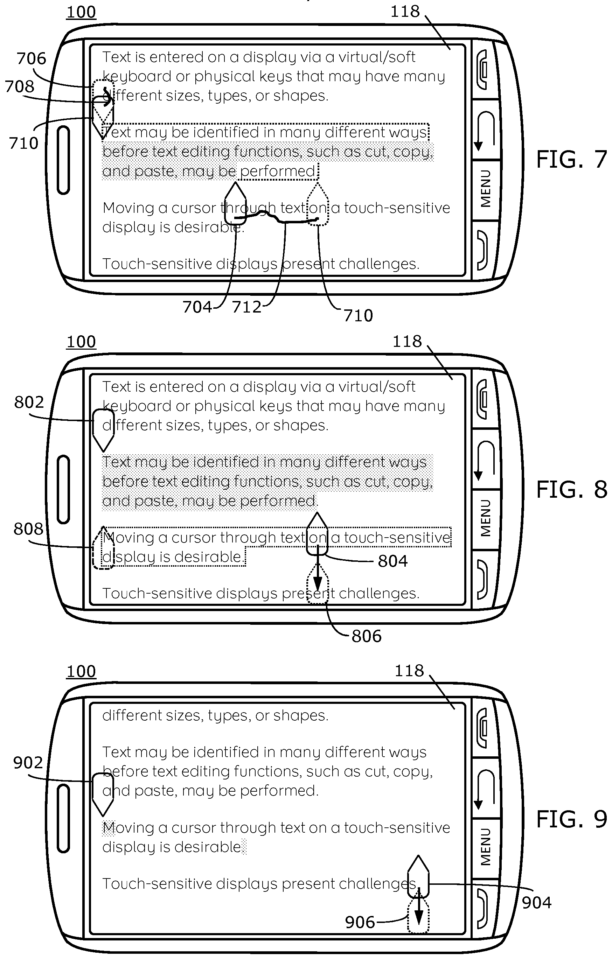

A flowchart illustrating a method of moving a text indicator displayed on a touch-sensitive display is shown in FIG. 2. The method may be carried out by software executed, for example, by the processor 102. Coding of software for carrying out such a method is within the scope of a person of ordinary skill in the art given the present description. The method may contain additional or fewer processes than shown and/or described, and may be performed in a different order. Computer-readable code executable by at least one processor of the portable electronic device to perform the method may be stored in a computer-readable medium. Although the process is described for a single text indicator and/or handle, examples of which are shown in FIG. 3 through FIG. 6, the process may be applied to each of two text indicators and/or handles, which may be simultaneously displayed and controlled, although the control of each indicator and/or handle is separately provided, examples of which are shown in FIG. 7 through FIG. 9.

Text is displayed 202 on the touch-sensitive display 118. The text may be displayed by any software application, for example, email, web browser, word processing, calendar, contacts, and other types of applications. When an indicator, such as a text indicator, is engaged 204, the text indicator is displayed 206 at a position within the text. An example of an indicator 302 is shown at a position within the text displayed in FIG. 3. The text indicator may be engaged by a touch or gesture, such as a tap, double tap, or swipe, by a menu selection, automatically by the electronic device depending on the information displayed, and so forth. Multiple text indicators may be engaged, for example, by detection of two touches that overlap in time, where an indicator is displayed in association with each of the two touches. The displayed position of the indicator may be at the location of the touch. The indicator may be a cursor, a thick line such as shown in FIG. 4 through FIG. 6, a highlighted or shaded area such as shown in FIG. 3 and FIG. 7 through FIG. 9, an enlarged character, a blinking character, a formatted character, for example italicized, bold, underscored, different color, and so forth. Indicators for multiple text indicators may be similar to the indicator displayed for a single text indicator, such as shown in FIG. 9. Alternatively, text between multiple text indicators may be highlighted or shaded, such as shown in FIG. 7 and FIG. 8.

A handle that is movable along the display is optionally displayed 208. The handle may have a simple shape or a complex shape. An example of display of a handle 304 is shown in FIG.3, which handle 304 is shaped with an arrow pointing toward the indicator 302, for example, similar to a sticky note for a signature. Any suitable shape or size may be utilized. The handle may be displayed attached to the indicator, wherein the indicator and the handle move together. The handle may advantageously be displayed separated from the indicator by a distance that may vary. For example, FIG. 5 illustrates a handle 510 separated from the indicator 506. The handle is a displayed item that controls the position of the text indicator. When a touch associated with the handle moves, the text indicator moves at least partially in coordination with the movement of the touch. For example, when a user touches the handle and moves an input member, such as a finger, along the touch-sensitive display 118, the text indicator moves. When the touch moves up, the indicator moves up; when the touch moves down, the indicator moves down; when the touch moves to the left, the indicator moves to the left; when the touch moves to the right, the indicator moves to the right, and so forth. A handle may be displayed for each of multiple text indicators.

When a touch is detected 210 at a location associated with the indicator is detected, the process continues at 212. A location associated with the indicator includes, for example, a touch at location at, on, or near the indicator when no handle is displayed and a touch at a location associated with the handle when a handle is displayed, e.g., a touch at a location at, on, or near the handle.

When movement of the touch is detected 212, the process continues at 214. Movement of the touch includes detection of a touch at a first location and a second location. Movement of the touch includes movement of a single continuous touch, movement of two or more discontinuous touches, including touches that release from the touch-sensitive display 118, e.g., touches that are no longer detected by the touch-sensitive display 118, and so forth.

Touches that control the position of a text indicator may result in undesirable display qualities, such as irregular or unexpected movement, such as jumping or bouncing from place to place, movement that appears to have been unintended, or other undesirable movement of the text indicator and/or handles. Such display qualities may distract or confuse the user. A touch that moves a handle may not necessarily be solely in the direction of the intended movement. For example, the path of touch that is intended to be horizontal only may not be purely horizontal, and the path of a touch that is intended to be vertical only may not be purely vertical. Jitter filters may eliminate undesired movement of displayed items due to slight movements of a touch location, but jitter filters do not address changes in touch location that are quick, such as when a user attempts to move a text indicator horizontally across a line of text.

In the example of FIG. 3, an initial position of a text indicator 302 at the "o" in "functions" has a handle 304 that is moved to the right or horizontally to the position 306 associated with the "c" in "cut" in the text. The detected path 308 of the touch has a vertical component as shown in this example. In prior devices, the indicator 302 may jump up and down vertically or otherwise jitter in a vertical direction until the final position 306, although a purely horizontal movement of the indicator 302 is intended. In the example of FIG. 7, an initial position of a text indicator at the "e" in "maybe" has a handle 704 that is moved to the right or horizontally to the position associated with the "." after "performed" in the text. The detected path 712 of the touch has a vertical component as shown in this example. In prior devices, the highlighted text may change vertically or otherwise jitter in a vertical direction until the final handle position 710, although a purely horizontal movement of the indicator is intended.

Similar issues may be present in the vertical direction. In the example of FIG. 4, an initial position of a text indicator 402 before the "m" in "many" has a handle 404 that is moved downwardly or vertically to the position 406 after the "e" in "be" in the text. The detected path 408 of the touch has a horizontal component as shown in this example. In prior devices, the indicator 402 may jump back and forth horizontally or otherwise jitter in a horizontal direction until the final position 406, although a purely vertical movement of the indicator 402 is intended. In the example of FIG. 7, an initial position of a text indicator at the "b" in "before" has a handle 710 that is moved upwardly or vertically to the position at the "T" in "Text" in the text. The detected path 708 of the touch has a horizontal component as shown in this example. In prior devices, the indicator highlighted text may change horizontally or otherwise jitter in a horizontal direction until the final handle position 706, although a purely vertical movement of the indicator is intended.

In order to prevent unwanted movement such as jumping or jitter of the display of the text indicator, one or more thresholds are utilized to control movement of the text indicator. When the touch movement does not meet a threshold, the handle, if displayed, is moved 216 in coordination with movement of the touch, and the position of the text indicator is not moved, i.e., the text indicator remains at its current location, and the process continues at 210. When the touch movement meets a threshold, the text indicator is moved 218 in the direction that the threshold is met. Any displayed handle is also moved. For example, when the touch movement meets a horizontal threshold, the text indicator is moved horizontally, e.g., by one character horizontally in the text. In another example, when the touch movement meets a vertical threshold, the text indicator is moved vertically, e.g., by one character vertically in the text. Thus, when the distance between a first touch location and a second touch location meet a threshold, the indicator is moved to another position in the text. The distance may be, for example, a horizontal distance or a vertical distance between two locations of the touch. The horizontal distance may be the horizontal component of a touch. The vertical distance may be the vertical component of a touch. In an example utilizing x-y Cartesian coordinates, when the first touch location is (0,0), and the second touch location is (x,y), the horizontal distance is x, and the vertical distance is y.

The threshold(s) are based on an aspect of the text. For example, the horizontal threshold is related to a horizontal aspect of the text, such as an average width of the characters, maximum character width, horizontal spacing between centers of characters such as h shown in FIG. 3, and so forth. In a more specific example, the horizontal threshold may be 50 % of the width of the character associated with or next to the text indictor. Different thresholds may be utilized moving to the left or moving to the right. In non-claimed embodiments, the horizontal threshold may be related to the horizontal spacing of the touch sensors or the horizontal threshold may be a simple horizontal distance.

In another example, the vertical threshold is related to a vertical aspect of the text, such as an average height of the characters, maximum character height, vertical spacing between centers of characters, vertical line spacing, e.g., vertical distance between the bottom of similar characters on adjacent rows of text such as v shown in FIG. 4, and so forth. For example, the vertical threshold may be 50% or 125% of the vertical line spacing. The threshold may be different in a downward versus an upward direction. In non-claimed embodiments, to move the text indicator upward, a threshold of 80% of the vertical line spacing may be utilized, whereas to move the text indicator downward, a threshold of 50% of the vertical line spacing may be utilized. In other non-claimed embodiments, the vertical threshold may be related to the vertical spacing of the touch sensors or the vertical threshold may be a simple vertical distance.

Optionally, only one threshold may be applied, e.g., only a vertical threshold or a horizontal threshold.

Another undesired display affect of a text indicator and/or handle may occur when the location of the touch is beyond the end of a line of text. As shown in FIG. 5, an indicator to the right of the "n" of "in" is associated with a handle 504 that is moved in a downward direction to a location between "through" and "text" in the last paragraph. A touch moves the handle 504 moves the text indicator 502 to a position where no text is present, e.g., below the "e" in "be," because the text of the line, i.e., "performed." does not extend that far across the line. Because no text is displayed to the right of "performed." in this line, the indicator 506 is moved to the end of the text of that line, e.g., after "performed." and control of the indicator 506 is changed to that position as well. Such change in control may have undesired effects. For example, a new handle 508 may be displayed at the location of the indicator 506. The current location of the touch may no longer being associated with the handle 508. The user may interpret such an action as the handle 504 being pulled out from under their finger, because the user sees the handle 508 displayed at a location other than where their finger is. When such a change of handle position 508 occurs and control of the handle moves to the new handle 508, the user needs to move the input member, e.g., their finger, to the new handle 508 to resume control of the text indicator 506. When a change of handle position 508 occurs and control of the handle does not move to the new handle 508, the user may think the user needs to move the input member to the new handle 508 to resume control of the text indicator 506, because the user is no longer touching the control, i.e., the handle 508.

As described herein, movement of the handle is coordinated with movement of the touch, such that the handle moves with the touch even when the text indicator moves away from the location, such as shown in the example of FIG. 5. Thus, movement of the handle is associated with the touch, rather than with movement of the text indicator. Movement of the handle is associated with the touch whether or not the text indicator moves. Such control eliminates the need or perceived need for the user to have to move an input member to control the text indicator when no text is displayed in association with a touch location, such as when text does not extend across the entire line or when the text line is blank. Thus, the device facilitates control such that a user may control movement of a text indicator vertically or horizontally, for example, along the right side of the touch-sensitive display 118, without having to pick up or move their finger and without the perception that the user needs to pick up or move their finger. As a result, the indicator may be displayed a distance separated from the handle, which distance may vary along the path of a touch. Movement of display of the indicator may be provided without moving the display of the movable handle associated with the indicator.

This enhancement may also be applied to display of multiple indicators, such as shown in FIG. 8. Two handles 802, 804 with text highlighted as the indicator of the current selection. In this example, to additionally select the paragraph below the current selection, the lower handle 804 is moved in downward direction. Prior devices may display a new handle 808 at the beginning of the blank text line, either requiring the user to move their input member or to retouch the new handle to continue the text selection process or giving the user the perception that the user needs to move their input member or to retouch the new handle.

As described herein, movement of the handle is coordinated with movement of the touch, such that the handle moves with the touch even when the text indicator moves away from the location, such as shown in the example of FIG. 8. The new handle 808 is not displayed, and control of text selection remains with the location of the touch. Thus, movement of the handle is associated with the touch, rather than with movement of the text indicator. Movement of the handle is associated with the touch whether or not the text indicator moves. Such control eliminates the need or perceived for the user to move an input member to control the text indicator when no text is displayed in association with a touch location, such as when text does not extend across the entire line or when the text line is blank. Thus, the device facilitates control such that a user may control movement of one or more text indicators vertically or horizontally, for example, along the right side of the touch-sensitive display 118, without having to pick up or move their finger or perceive the need to pick up or move their finger. As a result, the indicator may be displayed a distance separated from the handle, which distance may vary along the path of a touch. Movement of display of the indicator may be provided without moving the display of the movable handle associated with the indicator.

A front view of an electronic device showing a text indicator and handle moving near an end of text displayed on a touch-sensitive display is shown in FIG. 6. Another undesirable display effect associated with a handle for a text indicator may occur at the end of text, either at the top or the bottom. For example, when a touch associated with a handle reaches the bottom of the text in a document, prior devices either continue displaying the handle over other material outside the text area, such as a toolbar, menu or other control, or flip or mirror the handle such that the handle is displayed upside-down. Displaying the handle in an area beyond the text may result in activating controls in that area, such as a toolbar or menu, which activation is currently not intended or desirable. An example of an upside-down handle 512 is shown in FIG. 5. Such a handle is no longer associated with the current touch location, and a user is required to move their input member to move the new handle. When the bottom of text is detected, space is added below the text, such as shown in FIG. 6, to facilitate movement of the handle 608 below the text such that the user is able to control the text indicator at the bottom of the text without having to lift or move their input member and without the perception that the user needs to lift or move their input member. Similarly, added space may be provided at the top of the text when at the top of the touch-sensitive display 118. Thus, the handle is not removed from the touch location.

This enhancement may also be applied to display of multiple indicators, such as shown in FIG. 9. Two handles 902, 904 with a character highlighted in association with each handle to denote the current text selection. When the bottom of text is detected, space is added below the text, such as shown in FIG. 9, to facilitate movement of the handle 906 below the text such that the user is able to control the text indicator at the bottom of the text without having to lift or move their input member and without the perception that the user needs to lift or move their input member. Similarly, added space may be provided at the top of the text when at the top of the touch-sensitive display 118. Thus, the handle is not removed from the touch location.

The process of FIG. 2 may be exited at any time (not shown). For example, the process may end when a text editing process is initiated, such as deleting text, inserting or adding text, cutting text, copying text, pasting text, and so forth. Such text editing features are performed in relation to the indicator, such as deleting text before the indicator or copying text that is highlighted between two indicators. A touch such as a gesture not associated with text editing may end the process and the text indicator(s) and handle(s) are no longer displayed. A menu selection, or other actions or procedures, may also be utilized to end the process of FIG. 2.

Horizontal, vertical, up, down, right, and left are terms utilized herein to provide reference with respect to the displayed text and are not otherwise limiting. Meeting a threshold as described herein includes equaling and exceeding the threshold.

The present disclosure provides many text editing advantages for touch-sensitive displays. Applying thresholds gives the impression that the text indicator is moving along a horizontal or vertical rail. The movement of the text indicator is less jittery, does not jump or bounce from place to place unexpectedly, and flows more smoothly, for example, in the vertical and horizontal directions, e.g., when thresholds are applied before moving a text indicator. Movement of a touch associated with the handle tracks movement of the movable text indicator for some but not all of the movement of the touch. Movement of the handle sometimes controls movement of the text indicator and sometimes does not control movement of the text indicator. Avoiding flipping of handles at the bottom or top of text by adding space at the bottom or top of the text prevents the handle from being moved away from the current touch location or being displayed on toolbars, menus, or other input mechanisms. Control of the text indicator may be provided anywhere on the touch-sensitive display, whether or not text is displayed in association with the touch location, without moving a text indicator from the touch location. The electronic device facilitates the ability of the user to control the text indicator position anywhere on the touch-sensitive display without having to move their input member from its current location or the user perceiving that the user needs to move their input member from its current location. Because the handle moves in coordination or along with the touch movement, and not necessarily with the text indicator, a user is able to see when the position of the handle changes the position of the text indicator.

The described embodiments are to be considered in all respects only as illustrative and not restrictive. The scope of the disclosure is, therefore, indicated by the appended claims rather than by the foregoing description. All changes that come within the meaning of the claims are to be embraced within their scope.

## Claims

1. A method for displaying a text indicator, comprising:
displaying text including characters on a touch sensitive display (112);
displaying a text indicator (302, 402) at an initial position within the text;
displaying a handle (304, 404) that is associated with the text indicator;
detecting a continuous movement of a touch associated with the handle, **characterized in that** the continuous movement comprises a horizontal component and a vertical component;
when one of the horizontal component and the vertical component of the continuous movement meets one of a first threshold and a second threshold, respectively, moving the text indicator in coordination with the handle to a new position within the text in one of a horizontal direction and vertical direction, respectively; and
when each of the horizontal component and the vertical component of the continuous movement does not meet the first threshold and the second threshold, respectively, maintaining the text indicator at the initial position while the handle is moved in coordination with the horizontal component and the vertical component of the continuous movement,
wherein the first threshold is chosen among an average width of the characters, a maximum character width, a horizontal spacing between centers of characters, and 50 % of the width of the character associated to or next to the text indicator, or
the second threshold is chosen among an average height of the characters, a maximum character height, a vertical spacing between centers of characters, 50 % of the vertical line spacing, and 125 % of the vertical line spacing.

2. The method of claim 1, further comprising moving the display of the handle on the touch-sensitive display in coordination with movement of the touch associated with the handle, whether or not the text indicator moves.

3. The method of any preceding claim, wherein movement of a touch associated with the handle tracks movement of the text indicator for some but not all of the movement of the touch associated with the handle.

4. The method of any preceding claim, further comprising detecting movement of the touch and moving display of the text indicator in coordination with movement of the touch at least along part of a path of the touch.

5. The method of any preceding claim, further comprising utilizing the new position to perform a text editing function on the text.

6. The method of any preceding claim, further comprising:
displaying a second text indicator at a second initial position within the text;
displaying a second handle that is associated with the second text indicator;
detecting a second touch associated with the second handle;
detecting movement of the second touch and moving display of the text indicator in coordination with movement of the second touch at least along part of a path of the second touch.

7. The method of claim 6, wherein a distance between the second text indicator and the second handle varies along a path of the second touch.

8. A computer-readable medium having computer-readable code executable by at least one processor of a portable electronic device to perform the method of any preceding claim.

9. An electronic device (100) comprising a touch-sensitive display and configured to perform the method of any one of claims 1 to 7.

## Patentansprüche

1. Verfahren zum Anzeigen eines Textindikators, das Folgendes umfasst:
Anzeigen von Text, der Zeichen beinhaltet, auf einer berührungsempfindlichen Anzeige (112);
Anzeigen eines Textindikators (302, 402) an einer Anfangsposition im Text;
Anzeigen eines Griffs (304, 404), der mit dem Textindikator verknüpft ist;
Detektieren einer kontinuierlichen Bewegung einer Berührung, die mit dem Griff verknüpft ist, **dadurch gekennzeichnet, dass** die kontinuierliche Bewegung eine horizontale Komponente und eine vertikale Komponente umfasst;
Bewegen des Textindikators in Koordination mit dem Griff zu einer neuen Position im Text in eine von einer horizontalen Richtung bzw. einer vertikalen Richtung, wenn eine der horizontalen Komponente und der vertikalen Komponente der kontinuierlichen Bewegung eines von einem ersten Schwellwert bzw. einem zweiten Schwellwert erfüllt; und
Beibehalten des Textindikators an der Anfangsposition, während der Griff in Koordination mit der horizontalen Komponente und der vertikalen Komponente der kontinuierlichen Bewegung bewegt wird, wenn jede der horizontalen Komponente und der vertikalen Komponente der kontinuierlichen Bewegung den ersten Schwellwert bzw. den zweiten Schwellwert nicht erfüllt,
wobei der erste Schwellwert aus einer durchschnittlichen Breite der Zeichen, einer maximalen Zeichenbreite, einem horizontalen Abstand zwischen der Mitte von Zeichen und 50% der Breite des Zeichens, das mit dem Textindikator verknüpft ist oder sich neben demselben befindet, ausgewählt wird, oder
der zweite Schwellwert wird aus einer durchschnittlichen Höhe der Zeichen, einer maximalen Zeichenhöhe, einem vertikalen Abstand zwischen der Mitte von Zeichen, 50% des vertikalen Zeilenabstands und 125% des vertikalen Zeilenabstands ausgewählt.

2. Verfahren nach Anspruch 1, das ferner das Bewegen der Anzeige des Griffs auf der berührungsempfindlichen Anzeige in Koordination mit der Bewegung der Berührung, die mit dem Griff verknüpft ist, gleich ob der Textindikator bewegt wird oder nicht, umfasst.

3. Verfahren nach einem der vorhergehenden Ansprüche, wobei die Bewegung einer Berührung, die mit dem Griff verknüpft ist, die Bewegung des Textindikators für einen Teil, aber nicht der gesamten Bewegung der Berührung, die mit dem Griff verknüpft ist, verfolgt.

4. Verfahren nach einem der vorhergehenden Ansprüche, das ferner das Detektieren der Bewegung der Berührung und das Bewegen der Anzeige des Textindikators in Koordination mit der Bewegung der Berührung mindestens entlang eines Teils eines Pfads der Berührung umfasst.

5. Verfahren nach einem der vorhergehenden Ansprüche, das ferner das Verwenden der neuen Position zum Durchführen einer Textbearbeitungsfunktion am Text umfasst.

6. Verfahren nach einem der vorhergehenden Ansprüche, das ferner Folgendes umfasst:
Anzeigen eines zweiten Textindikators an einer zweiten Anfangsposition im Text;
Anzeigen eines zweiten Griffs, der mit dem zweiten Textindikator verknüpft ist;
Detektieren einer zweiten Berührung, die mit dem zweiten Griff verknüpft ist;
Detektieren der Bewegung der zweiten Berührung und Bewegen der Anzeige des Textindikators in Koordination mit der zweiten Bewegung der Berührung mindestens entlang eines Teils eines Pfads der zweiten Berührung.

7. Verfahren nach Anspruch 6, wobei ein Abstand zwischen dem zweiten Textindikator und dem zweiten Griff entlang eines Pfads der zweiten Berührung variiert.

8. Computerlesbares Medium mit computerlesbarem Code, der von mindestens einem Prozessor einer tragbaren elektronischen Vorrichtung ausführbar ist, um das Verfahren nach einem der vorhergehenden Ansprüche durchzuführen.

9. Elektronische Vorrichtung (100), die eine berührungsempfindliche Anzeige umfasst und dazu ausgelegt ist, das Verfahren nach einem der Ansprüche 1 bis 7 durchzuführen.

## Revendications

1. Procédé pour l'affichage d'un indicateur de texte, comprenant :
l'affichage d'un texte incluant des caractères sur un afficheur tactile (112) ;
l'affichage d'un indicateur de texte (302, 402) à une position initiale au sein du texte ;
l'affichage d'une poignée (304, 404) qui est associée à l'indicateur de texte ;
la détection d'un mouvement continu d'un toucher associé à la poignée,
**caractérisé en ce que**
le mouvement continu comprend une composante horizontale et une composante verticale ;
lorsque l'une parmi la composante horizontale et la composante verticale du mouvement continu atteint l'un parmi un premier seuil et un second seuil, respectivement, le déplacement de l'indicateur de texte en coordination avec la poignée vers une nouvelle position au sein du texte dans l'une d'une direction horizontale et d'une direction verticale, respectivement ; et
lorsque chacune parmi la composante horizontale et la composante verticale du mouvement continu n'atteint pas le premier seuil et le second seuil, respectivement, le maintien de l'indicateur de texte à la position initiale tandis que la poignée est déplacée en coordination avec la composante horizontale et la composante verticale du mouvement continu,
dans lequel le premier seuil est choisi parmi une largeur moyenne des caractères, une largeur de caractère maximale, un espacement horizontal entre centres de caractères, et 50 % de la largeur du caractère associé à, ou à côté de, l'indicateur de texte, ou
le second seuil est choisi parmi une hauteur moyenne des caractères, une hauteur de caractère maximale, un espacement vertical entre centres de caractères, 50 % de l'interligne vertical, et 125 % de l'interligne vertical.

2. Procédé selon la revendication 1, comprenant en outre le déplacement de l'affichage de la poignée sur l'afficheur tactile en coordination avec un mouvement du toucher associé à la poignée, que l'indicateur de texte se déplace ou non.

3. Procédé selon une quelconque revendication précédente, dans lequel un mouvement d'un toucher associé à la poignée suit un mouvement de l'indicateur de texte pour une partie, mais pas la totalité, du mouvement du toucher associé à la poignée.

4. Procédé selon une quelconque revendication précédente, comprenant en outre la détection d'un mouvement du toucher et le déplacement de l'affichage de l'indicateur de texte en coordination avec un mouvement du toucher au moins le long d'une partie d'une trajectoire du toucher.

5. Procédé selon une quelconque revendication précédente, comprenant en outre l'utilisation de la nouvelle position pour réaliser une fonction d'édition de texte sur le texte.

6. Procédé selon une quelconque revendication précédente, comprenant en outre :
l'affichage d'un second indicateur de texte à une seconde position initiale au sein du texte ;
l'affichage d'une seconde poignée qui est associée au second indicateur de texte ;
la détection d'un second toucher associé à la seconde poignée ;
la détection d'un mouvement du second toucher et le déplacement de l'affichage de l'indicateur de texte en coordination avec un mouvement du second toucher au moins le long d'une partie d'une trajectoire du second toucher.

7. Procédé selon la revendication 6, dans lequel une distance entre le second indicateur de texte et la seconde poignée varie le long d'une trajectoire du second toucher.

8. Support lisible par ordinateur ayant un code lisible par ordinateur exécutable par au moins un processeur d'un dispositif électronique portable pour réaliser le procédé selon une quelconque revendication précédente.

9. Dispositif électronique (100) comprenant un afficheur tactile et configuré pour réaliser le procédé selon l'une quelconque des revendications 1 à 7.
